Europäisches Patentamt

European Patent Office

Office européen des brevets

(11) Publication number: **0 430 432 A2**

# EUROPEAN PATENT APPLICATION

(21) Application number: 90311685.3

(22) Date of filing: 25.10.90

(51) Int. Cl.5: **B01J 49/00, B01D 53/14,**
**B01J 41/04**

(30) Priority: 26.10.89 US 427550

(43) Date of publication of application:
**05.06.91 Bulletin 91/23**

(84) Designated Contracting States:
**DE ES FR GB IT NL Bulletin**

(71) Applicant: **Conoco Inc.**
**1000 South Pine Street**
**Ponca City Oklahoma 74603(US)**

(72) Inventor: **Veatch, Fred C.**
**R.R. No. 1, Box 151**
**Newkirk, Oklahoma 74647(US)**

(74) Representative: **Woodman, Derek et al**
**Frank B. Dehn & Co. European Patent**
**Attorneys Imperial House 15-19 Kingsway**
**London WC2B 6UZ(GB)**

(54) Removal of heat stable anions from alkanolamine salts.

(57) Aqueous alkanolamine solution containing acidic anions which form heat stable salts with alkanolamine and low levels of metal cations, such as iron, is reactivated by contacting the solution with a basic anion exchange resin to remove such anions. The exchange resin is then contacted with a base to displace the anions. Iron buildup in the resin is removed periodically by an acid wash.

EP 0 430 432 A2

# REMOVAL OF HEAT STABLE ANIONS FROM ALKANOLAMINE SALTS

## Background Of The Invention

Alkanolamine sweetening units are used for the removal of $H_2S$ and $CO_2$ from natural gases, enhanced oil recovery gases, refinery hydrodesulfurizer recycle gases, FCCU and Coker gas plant tail gases, LPG streams, and Claus sulfur recovery tail gases. The alkanolamines commonly used are ethanolamine, diethanolamine, methyl diethanolamine, diisopropanol amine, and triethanol amine. These compounds are weak bases in water solution. When solutions of alkanolamines are contacted in packed, sieve plate, bubble cap, or valve tray columns with streams containing $H_2S$ and $CO_2$, the $H_2S$ and $CO_2$ dissolve into the alkanolamine solution. The following chemical reactions then take place:

$H_2S$  $H_2S$ + A Amine = AAmine $H^+$ + $HS^-$

$CO_2$  $H_2O$ + $CO_2$ + A Amine = AAmine $H^+$ + $HCO_3^-$

General Eqn.: Acid Gases + Alkanolamine = Alkanolamine Salts of Acid Gases

The solution of water, unreacted alkanolamine, and alkanolamine salts are subjected to steam stripping to decompose the alkanolamine salts and remove $H_2S$ and $CO_2$ from the alkanolamine. The $H_2S$ and $CO_2$ removed from the alkanolamine can then be processed by Claus sulfur recovery, incineration, fertilizer manufacture, or other means.

$H_2S$ and $CO_2$ are not the only gases in the above referred to streams which form weak acids when dissolved in water. Other such acid gases, as they are commonly called, that may appear in gas streams treated with alkanolamine include $SO_2$, COS, or HCN. These gases also undergo the same reactions as $H_2S$ and $CO_2$ to form alkanolamine salts. These salts, though, cannot be removed by steam stripping as $H_2S$ and $CO_2$ salts are. Thus, they remain and accumulate in the system.

Another problem is presented if oxygen gets into the alkanolamine system. Oxidation of acid gas conjugate base anions leads to the formation of other alkanolamine salts, most commonly salts of thiosulfate ($S_2O_3^{-2}$), sulfate ($SO_4^{-2}$), thiocyanate ($SCN^-$). Other inorganic acid anions, such as, chloride ($Cl^-$) may also be present. These salts cannot be removed by steam stripping either.

Alkanolamine salts which cannot be heat regenerated, called heat stable salts, reduce the effectiveness of alkanolamine treating. The alkanolamine is protonated and cannot react with either $H_2S$ or $CO_2$ which dissolve into the solution. Also, accumulated alkanolamine salts are known to cause corrosion in carbon steel equipment which is normally used in amine systems. The salts are also known to cause foaming problems which further decreases treating capacity.

By one procedure the heat stable alkanolamine salts are contacted with a basic anionic exchange resin whereby the acidic anions in the salts such as thiocyanate and formic anions, displace the hydroxide ions at the cationic sites on the resin. This releases the alkanolamine which can be reused in the treating process. The resin is regenerated by elution with sodium hydroxide to displace the acidic anions with hydroxide ions.

The alkanolamine treating process is conducted in metal vessels and lines which are subject to corrosion by the various chemicals passing therethrough. As a result of the corrosion small amounts of iron cations, viz $Fe^{++}$ and $Fe^{+++}$, are released in the system. While very small in quantity the iron is taken up in the basic anionic exchange resin, and over a period of time accumulates on the resin in sufficient quantity to deactivate the resin. The iron and any other metal impurities present, such as sodium, potassium, silicon, etc. are not removed from the resin by the caustic (NaOH) regeneration described above.

## Prior Art

U. S. Patent No. 2,797,188 discloses a system for regenerating spent alkanolamine absorbent used in treating petroleum hydrocarbon fluids. The regeneration is accomplished by contacting the spent alkanolamine absorbent containing heat stable alkanolamine salts such as those of thiocyanate and formic acid with a strongly basic anion exchange resin. The process removes the thiocyanate and formate ions in the alkanolamine solution and replaces them with hydroxyl ions from the resin. The patent also reveals regeneration of the resin by eluting with a sodium hydroxide stream to replace the heat stable anions again with hydroxyl ions. The patent also discloses flushing the resin with water prior to and subsequent to the elution with the sodium hydroxide stream.

U. S. Patent No. 4,477,419 discloses the removal of $CO_2$ from gases with monoethanolamine absorbent. It also teaches the use of strongly basic anion exchange resin to remove anions of heat stable salts present in the alkanolamine solution.

The Invention

According to this invention, the alkanolamine solution containing heat stable alkanolamine salts of acidic anions is contacted with a basic anion exchange resin to remove the acidic anions from the solution and thereafter the resin is contacted with base whereby the acidic anions are displaced from the resin. Small quantities of iron and other metal cations, which contaminate the resin over a period of time may be removed periodically by contacting the resin with a dilute mineral acid, followed by second contact with a base to neutralize any residual acid and replace hydroxide ions at the anionic sites on the resin.

Brief Description of the Drawings

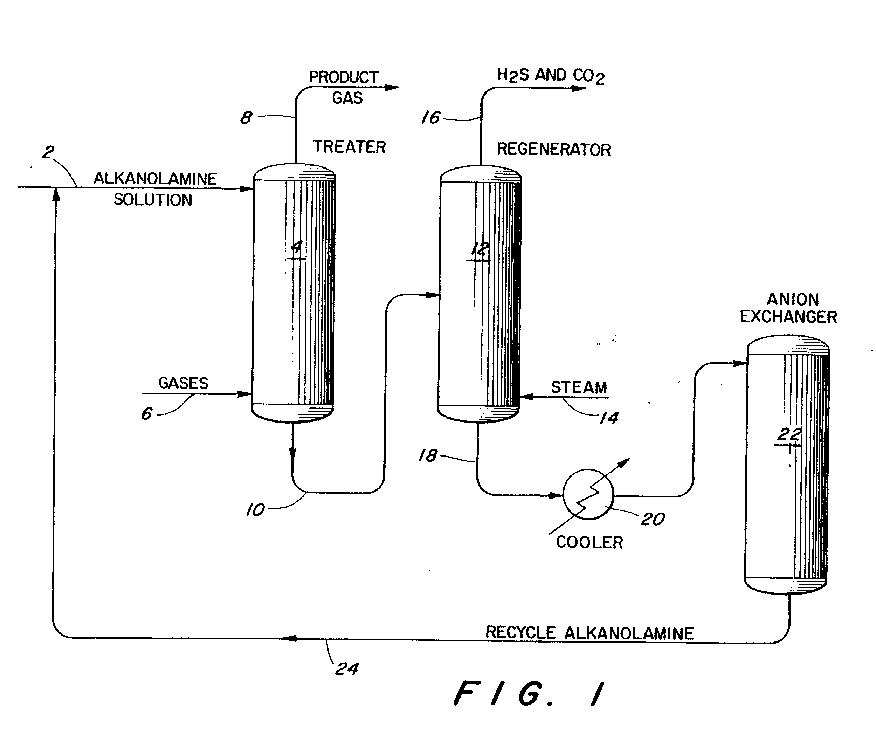

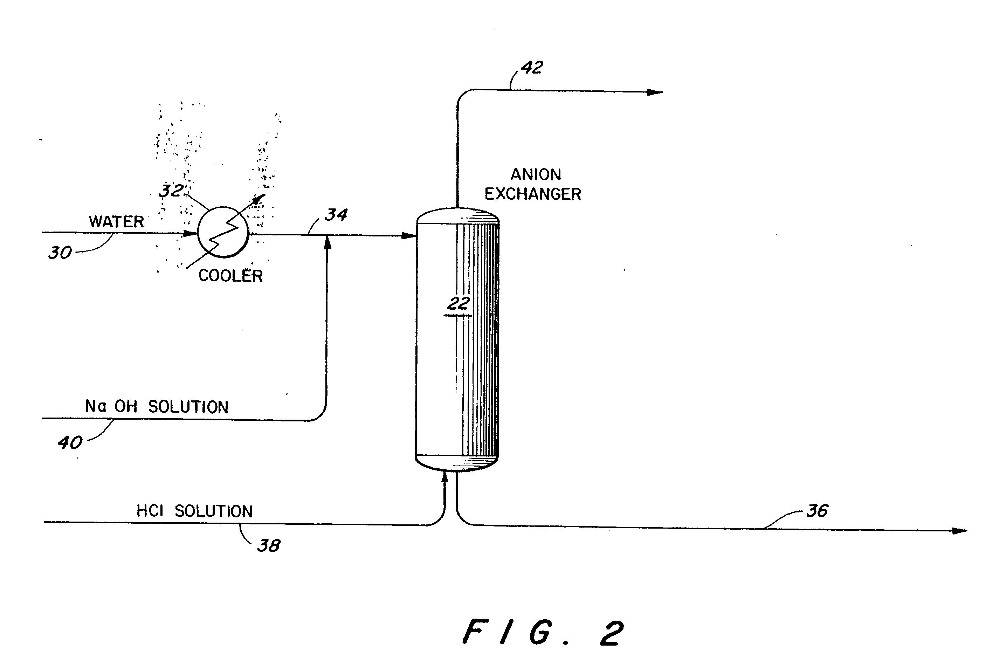

Figures 1 and 2 are schematic flow diagrams illustrating embodiments of the invention.

Detailed Description of the Invention

The process of the invention may be used to reactivate any spent aqueous alkanolamine solution which contains heat stable alkanolamine salts of acidic anions. As previously pointed out, such spent alkanolamine solutions result usually from processes in which hydrocarbon gases are contacted with an aqueous alkanolamine solution to absorb such impurities as $H_2S$ and $CO_2$. The resulting solutions which contain alkanolamine salts of $H_2S$ and $CO_2$ also contain alkanolamine salts of various inorganic acidic anions which are present in the hydrocarbon gases, or are formed in the solution by oxidation resulting from oxygen entering the alkanolamine treating system. In addition to the inorganic acid anions, the alkanolamine solution may also be contaminated with organic anions such as anions of formic and acetic acid and the like. The alkanolamine salts of $H_2S$ and $CO_2$ are not heat stable and may readily be decomposed by steam stripping with the concomitant removal of the released $H_2S$ and $CO_2$. The salts of the acid anions are unaffected by heat or steam stripping and must be otherwise removed.

The process of this invention in which the heat stable alkanolamine salts are removed to prevent buildup of these contaminants in the alkanolamine treating solution and iron and other metal cations present in the alkanolamine treating solution in small amounts are also removed is best described by reference to the drawings.

Referring to Figure 1, a gas containing undesirable hydrogen sulfide and carbon dioxide is introduced to a countercurrent treating zone 4 through line 6. The gas flows upwardly through treater 4 and contacts downflowing alkanolamine, in this instance, ethanolamine solution which is introduced to the top of the treater through line 2. The temperature in the treater is usually maintained in the range of between about 90 and about 130 ° F while the pressure varies from between about 0 and about 1700 psig.

A product gas substantially free from hydrogen sulfide and carbon dioxide is withdrawn from the top of the treater via line 8. Ethanolamine solution containing absorbed hydrogen sulfide and carbon dioxide as salts of ethanolamine is removed from the treater through line 10 and introduced to regenerator 12. Steam introduced to the bottom of the regenerator through line 14 passes upward through the ethanolamine solution providing heat to decompose the hydrogen sulfide and carbon dioxide salts and strip them from the ethanolamine solution. A mixture of steam, hydrogen sulfide, and carbon dioxide is then removed overhead from the regenerator through line 16.

As pointed out previously, the feed gases introduced to the system in addition to hydrogen sulfide and carbon dioxide contain various acids and acidic gases which react with the ethanolamine to form heat stable ethanolamine salts. These salts being unaffected by the steam introduced to regenerator 12 pass along with the ethanolamine solution from the bottom of the regenerator through line 18 into a cooler 20 where the solution is reduced in temperature to between about 90 ° F and about 105 ° F to protect the ion exchange material contained in anion exchanger 22. After cooling, the mixture is introduced to anion exchanger 22 which contains a basic anionic exchange resin. In the anion exchanger, hydroxide ion attached to the cationic sites on the resin is displaced by the various anions contained in the ethanolamine salts. The ethanolamine solution freed from salts then leaves the anion exchanger and can be recycled to the gas treating system through line 24.

Periodically, the anion exchange resin will require regeneration, a procedure for which is illustrated in Figure 2. To initiate regeneration the flow of amine solution to anion exchanger 22 is halted and water is introduced to the system through line 30. In order to protect the ion exchange materials, the water is cooled in cooler 32 and introduced through line 34 to anion exchanger 22. From there the water is removed from the unit through line 36. The purpose of the water is to flush the exchanger of all ethanolamine. If desired, the water containing ethanolamine may be combined with the ethanolamine stream leaving regenerator 12. After the ethanolamine is flushed from the resin bed, anion exchanger 22 is then eluted with an alkali metal hydroxide solution containing from about 5 to about 25 weight percent alkali metal hydroxide and preferably from about 10 to about 15 weight percent which is introduced to the anion exchanger through lines 40 and 34, and exits the exchanger via line 36. Any alkali metal hydroxide may be used for this purpose, such as potassium hydroxide or lithium hydroxide, however, for economic reasons, sodium hydroxide is preferred. Ammonium hydroxide may also be used to replace the heat stable salt anions with hydroxide ions. The use of ammonia is advantageous since it is easily recovered from the effluent from the anion exchanger for reuse in the process. Introduction of the alkali metal hydroxide is continued until the heat stable salt anions in the anion exchanger have been replaced with hydroxide ions. Except as previously stated the streams leaving anion exchanger 22 through line 36 are normally sent to waste water treating. After elution the resin bed is washed with water to remove residual alkali metal hydroxide. After completion of washing introduction of ethanolamine solution to the treating process may be resumed as illustrated in Figure 1.

As stated previously small quantities of iron and other metal cations are present in the alkanolamine solution due primarily to corrosion of metal lines and vessels. These metals, particularly the iron, are taken up by and tend to accumulate on the ion exchange resin. Over a period of time they can, if not removed, reduce the effectiveness of the resin. Referring again to Figure 2 when the build up of iron and other metal cations on the resin begins to adversely affect its properties a dilute solution of mineral acid, such as HCl is introduced through line 38 to anion exchanger 22 and passed upwardly in contact with the resin, exiting through line 42. The acid reacts with the iron and other metal impurities on the resin to form salts of the metals which are removed from anion exchanger 22 in the acid stream. Upon completion of the acid wash, the anion exchanger 22 is again contacted with a base (as previously described) to remove any residual acid and metal salts, and replace hydroxide ions at the cationic sites on the resin. At this point the resin is ready for reuse and may again be contacted with spent aqueous alkanol amine solution.

The amounts of iron and other metal cations in the spent aqueous alkanolamine solution is very small, usually from about 0.001 to about 0.1 weight percent. The acid wash used to remove these cations from the ion exchange resin is carried out infrequently, when the cations begin to adversely affect the activity of the resin. Ordinarily the resin will not require acid wash more often than every 5 to 10 regeneration cycles. The amount of acid required for an effective wash is indicated by the red color of the acid leaving the resin bed.

The process of the invention has been described in conjunction with a batch operation. The process may also be carried out continuously by providing a plurality of resin exchangers, with appropriate piping and valves.

Although washing the resin bed with acid is preferably carried out counterflow (upward flow) to the spent aqueous amine solution and the caustic wash solution, concurrent flow of the acid may also be used if desired.

The invention has been specifically described in its application of ethanolamine, however, any of the other common alkanolamines previously mentioned may be used in the process. The alkali metal base used to convert the alkanolamine heat stable salts to alkali metal salts is preferably sodium hydroxide, however, as mentioned previously, other alkali metal hydroxides, such as potassium hydroxide may also be employed. When aqueous ammonia solution is used as the base, the ammonia will constitute between about 5 weight percent and about 25 weight percent of the solution and preferably between about 10 and about 15 weight percent.

Of the mineral acids which may be used to displace the alkali metal from the exchange resin, hydrochloric acid is preferred, however, other mineral acids, such as sulfuric acid or nitric acid may be employed. Dilute concentrations of acid are desirable; usually the acid strength will be between about 5 weight percent and about 25 weight percent acid and preferably between about 10 and about 15 weight percent.

The ion exchange treating system described herein can be used to remove heat stable salts of alkanolamines whatever their source. For example, such salts may be contained in waste amine solutions which also require treatment to recover the amine for further use. Waste amines are generated from purging the circulation system, amine collected from upsets in the circulating system or other contaminated amines. Removing the heat stable salts reduces foaming losses, corrosion, and maximizes the active alkanolamine concentration. Heat stable salt removal from waste amine solutions allows the active amine in the waste solutions to reenter the circulating amine solution without causing additional foaming, corrosion or amine deactivation problems. Also the cost of makeup amine is reduced by returning the waste amine to service in the system.

A variety of basic ion exchange resins may be used in the process of the invention. Included are such materials as Mobay M500, a strong base anion exchange resin, which is a polystyrene resin with quaternary ammonium groups attached to the polymer framework; Rohm and Haas Amberlite A-26, a strong base anion exchange resin, which is a styrene/divinyl benzene copolymer with quaternary ammonium groups attached to the polymer framework; and Rohm and Haas Amberlite IRA-410, a strong base amine-type anion exchange resin. Also included are Dow styrene-divinyl benzene strong base anion exchange resins having quaternary amines as their functional group. These materials are available under the DOWEX trademark. The preceding are merely illustrative of useful basic ion exchange resins and are not intended to limit the resins which may be used in carrying out the invention.

The following example is presented in illustration of the invention.

## Example

A column 3/4" x 10" was packed with 41 grams of Rohn and Haas A-26 strongly basic macroreticular resin. The resin was first converted to the OH form with 300 ml of 10% NaOH.

Three consecutive exhaustion and regeneration runs were made with 19 ml of solution containing 7.43 gm of MDEA (methyldiethanol amine) and the amounts of anions shown in Table 1, which were sufficient to saturate the column. A similar Run 4 was made, but with five times the amount (95 ml) of solution of the same composition. The results of Runs 1-4 are shown in Table 1.

Table 1

| | Exhaustion | | | Regeneration Effluent | |
|---|---|---|---|---|---|
| | Feed gm | Effluent gm | % Feed Removed by Resin | gm | % Removed |
| Run 1 | | | | | |
| Acetate | 0.4955 | 0.1548 | 68.8 | 0.3782 | 111.0* |
| Formate | 0.2395 | 0.0116 | 95.2 | 0 | 0 |
| Thiocyanate | 0.4697 | 0.0005 | 99.9 | 0.4696 | 100.0 |
| Chloride | 0.0242 | ------ | 100 | 0.0255 | 105.4* |
| Run 2 | | | | | |
| Acetate | 0.4955 | 0 | 100 | 0.5263 | 106.2* |
| Formate | 0.2395 | 0 | 100 | 0.2326 | 97.1 |
| Thiocyanate | 0.4697 | 0.0002 | 100 | 0.4486 | 95.6 |
| Chloride | 0.0242 | 0 | 100 | 0.0234 | 96.7 |
| Run 3 | | | | | |
| Acetate | 0.4955 | 0 | 100 | 0.5983 | 121.0* |
| Formate | 0.2395 | 0 | 100 | 0.2034 | 84.9 |
| Thiocyanate | 0.4697 | .002 | 100 | 0.3791 | 80.8 |
| Chloride | 0.0242 | 0 | 100 | 0.0080 | 33.1 |
| Run 4 | | | | | |
| Acetate | 2.6079 | 2.7896 | 0 | 0 | 0 |
| Formate | 1.2605 | 1.5802 | 0 | 0 | 0 |
| Thiocyanate | 2.4721 | 0.0037 | 99.8 | 1.9537 | 79.1 |
| Chloride | 0.1274 | 0.0983 | 22.8 | 0.0083 | 28.1 |

* The column used contained resin which had previously been contacted with contaminated MDEA. Apparently, the last regeneration of the column before Run 1 failed to remove all of these contaminants.

As is shown in Run 4, the column lost it's ability to retain acetate, formate and most of its chloride after 4 runs.

In order to restore the resin to full capacity, another run (Run 5) was made in which the column was washed with 200 ml of 10% sulfuric acid. The effluent from the acid wash was bright red in color. The results of Run 5 are shown in Table 2.

Table 2

| | Retained on Column From Previous 4 Runs, g | Removed with Sulfuric Acid Flush, g |
|---|---|---|
| Run 5 | | |
| Acetate | 0 | 0 |
| Formate | 0 | 0 |
| Thiocyanate | 0.5147 | 0.63* |
| Chloride | 0.208 | 0.22* |
| Iron | Unknown | 0.140 |
| Analysis of Run 5 effluent shows complete removal of Fe, $Cl^-$ and $SCN^-$. The affinity of the resin for the anions studied in this example is $SCN^- >$ $Cl^- >$ formate> Acetate. Therefore the most difficult anion to remove from the resin in regeneration is $SCN^-$, the easiest, acet te. | | |

* The column used contained resin which had previously been contacted with contaminated MDEA. Apparently, the last regeneration of the column before Run 1 failed to removal all of these contaminants.

While certain embodiments and details have been shown for the purpose of illustrating the present invention, it will be apparent to those skilled in this art that various changes and modifications may be made herein without departing from the spirit or scope of the invention.

**Claims**

1. A process for regenerating a basic anion exchange resin containing acidic anions which have displaced hydroxide ions from the cationic sites on the resin, said resin also containing accumulated metal cations which comprises:

(a) contacting the resin with a base selected from the group consisting of alkali metal hydroxides and ammonium hydroxide to displace the acid anions from the cationic sites with hydroxide ions;

(b) thereafter contacting the resin with a dilute mineral acid to remove the accumulated metal cations from the resin; and

(c) thereafter contacting the resin with a base to remove residual mineral acid and metal salts and replace hydroxide ions at the cationic sites on the resin.

2. A process according to claim 1 in which the resin is washed with water before and after steps (a), (b) and (c).

3. A process for treating an aqueous liquid solution of an alkanolamine containing heat stable salts of acidic anions with said alkanolamine and small amounts of metal cations characterized by:

(a) contacting said solution with a basic anion exchange resin whereby heat stable salt anions are removed from the solution,

(b) contacting the basic anion exohange resin with a base selected from the group consisting of alkali metal hydroxides and ammonium hydroxide whereby heat stable salt anions are removed from the resin; and

(c) periodically contacting the basic anion exchange resin with a dilute mineral acid whereby accumulated metal cations are removed from the resin.

4. A process for the removal of hydrogen sulfide and carbon dioxide from gases containing these materials and organic and inorganic acids and inorganic acid gases which comprises:

(a) contacting said gases with an aqueous solution of an alkanolamine containing small amounts of metal cations whereby said hydrogen sulfide, carbon dioxide and acid anions of said organic and inorganic

EP 0 430 432 A2

acids, and said inorganic acid gases combine with the alkanolamine to form alkanolamine salts;

(b) heating the resulting alkanolamine salt containing solution to decompose the salts of hydrogen sulfide and carbon dioxide and thereby recover these materials;

(c) contacting the remaining alkanolamine solution and remaining salts, which are heat stable, with a basic anion exchange resin to remove heat stable anions from the alkanolamine salts;

(d) thereafter contacting the resin with an alkali metal hydroxide to remove acid anions from the resin;

(e) periodically contacting the resin with a dilute mineral acid to remove accumulated metal cations from the resin; and

(f) after step (e) again contacting the resin with an alkali metal hydroxide to remove residual mineral acid and metal salts and replace hydroxide ions at the cationic sites on the resin.

5. A process according to claim 4 in which the resin is washed with water after steps (c), (d), (e) and (f).

6. A process according to claim 4 in which step (c) is carried out with upward flow.

7. A process according to any one of claims 1 to 3 wherein the base is sodium hydroxide.

8. A process according to any one of claims 4 to 6 wherein the alkali metal hydroxide is sodium hydroxide.

9. A process according to any one of the preceding claims in which the said metal cations include $Fe^{++}$ and $Fe^{+++}$.

10. A process according to any one of the preceding claims in which the mineral acid is hydrochloric acid or sulfuric acid.

11. A process according to any one of the preceding claims in which the acidic anions are selected from the group of organic acids, acid gases and acidic anions consisting of $SO_2$, $COS$, $HCN$, $S_2O_3^{=}$, $SO_4^{=}$, $SCN^-$, $HCOOH$, $CH_3COOH$, and $Cl^-$.

7

FIG. 1

F I G.  2

EP 0 430 432 A2